# EUROPEAN PATENT APPLICATION

(11) **EP 2 335 475 A2**
(43) Date of publication of application: **22.06.2011**
(21) Application number: 10015619.9
(22) Date of filing: 14.12.2010
(51) Int. Cl.: A01K 5/01, A01K 15/02

(54) **Method and device for training animals in the course of their feeding**

(30) Priority: 18.12.2009 EE 200900093
(71) Applicant: Luchin, Mark, 13620 Tallinn (EE); Vakhterova, Nelli, 13620 Tallinn (EE)
(72) Inventor: Luchin, Mark, 13620 Tallinn (EE); Vakhterova, Nelli, 13620 Tallinn (EE)
(74) Representative: Kesselman, Ljubov

(57) **Abstract**

Invention concerns a method and a device for training animals in the course of their feeding. The invention can be used for the animals in conditions of closed keeping, including the sick and feeble animals and animals having only one workable front paw. The device (1) has the functions of both a simulator (trainer) and of a feeding trough. The container (2) of the device has the bottom (3), the walls (4) and the top cover (5). The food (9) is located at the bottom (3). The sizes of the upper aperture (6) and the cylindrical element (7) allow any of the limbs and the tail of the animal to reach the food, preventing the access of its teeth and tongue to the food. The animal takes the food with its limb or tail and displaces upwards. The psycho-physiological training effect occurs due to the use of a variety of complex movements of the limbs and tail of the animal when seizing the food from the bottom, and displacing it upwards.

## Description

### Technical Field

The present invention relates to the field of training the animals, which are under the supervision of the man, with the aim to increase their vitality. In particular, the invention regards the method and the device for training animals in the course of their feeding. The method according to the present invention is applicable to the animals that use their limbs or their tail to gather food or to get it by means of controlled finely differentiated movements of their limbs and tail. Among them are the representatives of primates, cat family, including the disabled animals that, for example, have only one front limb able to function.

### Background Art

Methods for training the animals having the prehensile instinct of hunting for prey, which are under the supervision of the man, to maintain their inborn unconditioned reflexes of getting food are known. According to these methods, the situation of self-reliant getting food by the animal is simulated. This approaches the psycho-physiological state of the animal to that characteristic for natural environmental conditions and thus - as a result - creates the effect of training in getting food that promotes the maintenance in the animal of its inborn unconditioned reflexes. Hereat, the amount of food obtained by the animal is appreciably proportional to the animal's persistence manifested while getting the food. Complicated access to the food prevents the animal from overeating, and the necessity to get the food independently by means of own efforts provides physical, psychological and intellectual training of the animal and thus promotes activation of the animal and increase of its tone, and - as a whole - maintenance of the animal's vitality indicators on the proper level. From the point of view of psycho-physiological training, getting food by means of prehensile movements of the animal's front limb, which is the habit pattern characteristic for unconditioned reflexes, is especially effective.

The nearest to the present invention technical solution known from the background art is the method and the device for feeding animals (feeding trough) providing the training effect, which is disclosed in the patent No. EE 04172 (Mark Lut 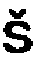 in et al; A01K 5/00, A01K 5/02; 17.06.2002). The known method includes placing the food on the surface for placing the food providing the possibility to access the food with one of the animal's front limbs, reaching the food with one of the front limbs, taking the food with one of the front limbs and moving the food with the front limb in the direction to the consumption zone. First of all, this method is applicable to the animals that have the instinct of hunting for prey. The known feeding trough consists of a container having a bottom and walls, where the food is placed on the bottom and where the aperture for accessing the animal's front limb into the container and for moving the food with the front limb in the direction to the consumption zone is available. The consumption zone is the space, where the food is accessible for the animal's mouth, tongue, teeth and lips. In the known solution, the consumption zone is the space outside the container.

In the known device, the food is placed on the bottom of the container next to the back wall; the aperture is located in the front wall at the bottom level. The animal, e.g. a cat, is sitting on the floor in front of the aperture and, having thrust its front limb into the container, is moving the food from the container along the bottom having pressed this food to the surface for moving the food by its paw. Moving of the food takes place in horizontal direction, and there is an obstacle on the way of moving the food to the aperture on the container bottom. The animal is trying to overcome the obstacle and at the same time not to lose the food kept by the limb, and instinctively keeps performing reflex movements by its finger-wrist-joint unit. These movements produce a stirring-up action on the brain activity. Having pulled the food out of the container, the animal is capable to bring it by the horizontal surface of the floor directly to the mouth of the animal.

When getting the food out of the known feeding trough, the sitting animal should be bending low and sometimes even to be lying, with its front part of the body being pressed to the floor, having thrust one of the front limbs through the aperture located next to the bottom and trying to reach the food, which is placed next to the back wall of the container. At that, the thorax of the animal is considerably lowered and rested against the feeding trough; the head is at the level of an aperture and is turned sideways; the neck, as a rule, is unnaturally extended, as the animal doesn't see the food and is trying to get it by touch; the back part of the body is lifted. In such a position, the backbone is bent and twisted in its neck part and front part of the back; the rest of the backbone is strongly bent in a vertical plane; back and neck muscles are overstrained because of unnatural position and are accordingly twisted and deformed - and at that asymmetrically on the left or on the right, especially in such cases when the animal is trying to help itself to reach the food by its teeth or tongue. The uncomfortable position of the body is tiring the animal; it loses its interest to the process of getting food; and this - as a whole - reduces the effect of training and the efficiency of getting the food from a feeding trough by the animal. Besides, some animals, especially weak, aged and sick ones, are soon getting tired and don't enjoy their getting food in such a way; so they obtain food in the minimal amount that is sufficient to sustain their life only, but does not provide their active behavior and cheerfulness.

Moreover, the animal with one front limb able to function can't use the known feeding trough. In the lying position in front of the feeding trough, such an animal is incapable to move the food out of the feeding trough with its only front limb, since, because of having no second, free, front limb, the animal can't successfully fix its body, falls sideways and tries to get the food with its teeth or tongue.

An additional problem arises due to the fact that, unlike to the real conditions of animals' life in the wild nature, where the prey tries to escape from the hunting animals' paws, the food which is taken out of the feeding trough is static with respect to an animal's paw and the food offers no active resistance; and this considerably reduces the effect of training.

Besides, since the thorax of the animal is located low enough, the animal can be soiled in the food crumbs that inevitably appear before the aperture of the feeding trough, in the zone of food consumption by the animal.

Thus, the disadvantages of the known method and the device for feeding animals with the training effect are as follows:
1) inconvenience of the animal's body position during getting food reduces the efficiency of training as a whole;
2) unlike to the real conditions of animals' life in the wild nature, where the prey tries to escape from the hunting animals' paws, the food which is taken out of the feeding trough offers no active resistance; and this considerably reduces the efficiency of training the inborn unconditioned reflexes in animals;
3) the known method isn't applicable to disabled animals that have only one front limb able to action, as well as to the weakened or elderly animals.

### Disclosure of the Invention

The object of the present invention is the elimination of the disadvantages specified above and creation of a new method and a new device for training the animals in the course of their feeding, which provides:
1) increase of physiological convenience to the animal;
2) ensuring more effective maintenance of inborn unconditioned reflexes in the animals who are under supervision of the man, i.e. increasing the efficiency of the training;
3) applicability to the weakened or elderly animals, as well to the disabled animals that have only one front limb able to action, with the purpose to provide them with the possibility of unassisted getting the food with the effect of training.

Thus, a new device should possess both the functions of a training simulator providing imitation of hunting for prey and of a feeding trough, as well as be more efficient and have a wide application range.

To achieve the object of the present invention, the method for training animals in the course of their feeding including the consecutive stages:
- placing the food on the surface for placing food providing access to the food with one of the front limbs of the animal,
- reaching the food with one of the front limbs of the animal,
- taking the food with one of the front limbs of the animal, and
- moving the food with one of the front limbs of the animal in the direction of the consumption zone, - according to the present invention has the following distinctive features:
- placing the food is carried out providing access to the food with at least one of the limbs and/or with the tail of the animal, without access to the food with teeth and/or the tongue, and providing possibility to reach the food in the direction of higher level to lower level; and
- reaching the food is carried out with at least one of the limbs and/or with the tail being in a position different from horizontal, and
- taking the food is carried out with at least one of the limbs and/or with the tail being in a position (having orientation) different from horizontal, and
- moving the food is carried out during the whole process of moving food with at least one of the limbs and/or with the tail in the direction of lower to higher level, providing control and adjustment of the food position relative to at least one of the limbs and/or to the tail moving the food, and preventing contact between the food and the surface for placing the food.

Also, to achieve the object of the present invention, the device for training the animals in the course of their feeding, comprising the container having the bottom and the walls, where the food is placed on the bottom, and the container has an aperture to access the food with the front limb of the animal to access the food and to move it with the front limb out of the container, - according to the present invention has the following distinctive features: the aperture is located above the bottom and made providing the possibility to access the food with any one of the limbs and/or the tail of the animal, but not providing the possibility to access the food with teeth and/or the tongue of the animal.

To provide a better understanding of the subject of the invention, the list of the terms used is given below.

Limbs are binate parts of the body of the animal for locomotion, taking, food getting. In mammals, one pair of front limbs and one pair of hind limbs are discriminated, while in monkeys, one pair of upper limbs and one pair of lower limbs are distinguished.

Paw is the lower part of the limb; it comprises the finger-wrist-joint unit, claws and, sometimes, additionally in some species of animals, the cupules of the fingers.

Finger-wrist-joint unit is the complex of paw elements, excluding the claws and cupules.

Claws are sharp curved keratin appendages formed from the skin on the ends of fingers and toes of the animals, which help at getting food.

Cupules of the fingers helping at climbing, jumping in trees and getting food are observed in long-tailed semi-monkeys of lemurs and in tarsiers.

Taking food is separation by the animal of a part of the food from the food placed on the bottom of the container and taking this part with the purpose to further move it to mouth of the animal.

Control is the active paying attention by the animals to the position of the food in the space in the course of moving the food.

Adjustment is the correction of the food positioning performed by the animal to prevent the loss of the food in the process of moving the food.

Unlike to the nearest known technical solution (prototype), in the method and the device according to the present invention, taking food with the limb of the animal and moving food inside the container in the direction to the consumption zone takes place not in the horizontal direction, but in the direction from below upwards, through the aperture located above the bottom level, when the position of the limb or of the tail of the animal differs from horizontal position. Therefore, unlike to the case of the prototype, when getting the food out of the device according to the invention, an animal, for example a cat, a monkey, a bear, a squirrel etc., isn't lying in an uncomfortable position having thrust one limb through the aperture of the container and trying to keep the body from overturning sideways. Using the device according to the invention, the animal is sitting with its head bended over to the device and having thrust the front or upper limb in the aperture in the direction top-down, while the animal's back is in the position natural to a sitting animal. This way the body of the animal doesn't experience any inconvenience and excessive physical tension, like it takes place in the case of the known technical solution (prototype), and this allows the animal to completely concentrate on hunting for the food. As a result, concentration of the attention and emphasis on the training are manifested in the method and the device according to the invention in a considerably higher degree than in the case of the prototype; and this provides a higher degree of the involvement of the animal into the process of getting food with considerably lesser inconveniences for the organism of the animal.

This provides a higher efficiency of the imitation in the animal of the psycho-physiological condition of animal being in the state of foraging in the natural environment and - as a result - a higher efficiency of the training of getting food to maintain the inborn unconditioned reflexes in the animals that are supervised by the man.

In the known device (prototype), the food is being moved with the limb of the animal in the horizontal direction while the food is pressed to the surface for moving the food and there is an obstacle on this surface to overcome it for the further movement of the food in the horizontal direction. The overcoming takes place in only one point of moving the food; and it occurs instantly, by means of the reflex motion of the finger-wrist-joint unit of one of front limbs. Herein, in the known method and the device, the possibility for the animal to perform some auxiliary actions with its teeth and tongue is not excluded. Unlike to the known device, in the method according to the invention, taking of the food is performed for its further separation from the bottom and is done with at least one of the limbs of the animal and/or with its tail when their position differs from the horizontal one and when the teeth and/or the tongue of the animal are unable to participate. When being separated from the bottom, the food passes - under the influence of the gravity force - into the unstable position, and this complicates the retention of the food with the limb or with the tail of the animal and creates the danger of the slipping-out and loss of the food. Unstable position of the food complicates its moving from the bottom to the mouth of the animal and affects the whole movement of the food, both inside the container and outside of it, which makes the animal to perform the control of position of the seized food and the adjustment of the food positioning.

Adjustment of the food position by the animal is performed via a complicated complex of motions of the elements of the limb and/or of the tail of the animal performing the moving of the food:
- prehensile motions of the claws and/or of the elements of the finger-wrist-joint unit, and/or
- pinning motions of the claws, and/or
- pincer-like motions of the claws and/or of the finger-wrist-joint unit, and/or
- hooking motions of the claws and/or of the finger-wrist-joint unit, and/or of the tail, and/or
- scooping motions of the finger-wrist-joint unit and/or the claws and/or of the tail, and/or
- twining motions of the tail, and/or
- sucking motions of the cupules of the fingers.

In addition to the pulling motions of the limb of the animal in the known method, in the method according to the invention, the moving of the food is also performed by means of zigzag-like and/or throwing-up motions of the finger-wrist-joint unit and/or of the claws of any limb and/or of the tail of the animal.

Compared to the known method, in the method according to the invention, the influence of the gravity force of the food in the aggregate with the instability of its position, when moving upwards not only does complicate the process of food extraction out of the device, but also makes it more attractive. The animal concentrates all its attention and does its best in being dexterous and quick-witted trying not to admit the loss of the food on the whole of its way to the animal's mouth. Compared to the case of the known method, this adds some excitement to the process, intensifies the instincts of the animal and stimulates it to make more diverse, and more complicated and vigorous motions of the limbs, including also hind and lower limbs, and also effective motions of the tail, with the aim to hold food. In the case of the method according to the invention, the number of the motions made by the animal to overcome the instability of the food position, when the food is being moved is essentially higher and the motions themselves are more diverse and more intensive than in the case of the known method. In the method according to the invention, the number of versions and the intensity of the controlled motions performed by the animal for taking the food and for the adjustment of its position when moving it upwards also increase. All of these finely differentiated motions of the elements of the limbs and of the tail, as well as the control by the animal over the balance of the food, which is being moved, strengthen the concentration of attention and intensify the work of the brain that promotes activation of the psycho-physiological activity of the animal.

According to the present invention, the control and adjustment of the position of the food during its moving out of the container provide a higher effect of maintenance of inborn unconditioned reflexes, more efficient imitation in the animal of the psycho-physiological condition of getting food in the natural environment, and also more valid intellectual training of the animals that are supervised by the man, as compared to the known device.

As a whole, the usage of the method and the device according to the invention promotes the increase of the vitality in the animal, the revival of its temperament and the improvement of its quick-wittedness and - as a whole - influences the development of its intelligence in a much higher degree and additionally with lesser inconveniences for the organism of the animal than in the case of the known device.

The device for training the animals in the course of their feeding, which realizes the method according to the present invention, combines the functions of both a simulator and a feeding trough, whose simulator features are emphasized in a higher degree as compared to the prototype, and presents a kind of simulator - feeding trough.

Unlike to the case of the known device, the animal is able to take the food out through the aperture located above the bottom level of the container and herein the animal can be comfortably sitting near the device and use only one limb with no need to resort for the help of the other limb. It makes it possible to use the device according to the invention in the case of the animals with one front limb able to function. Thus, the simulator - feeding trough according to the invention is applicable both to the animal who has only one front limb and to the animal whose front limb is damaged or unable to function because of the post-operational period, and, alongside with the food, the animal will be receiving a feasible portion of training of the natural instincts and the increase of vitality.

After a certain skill was acquired in the course of getting the food from the device according to the invention, the animal is able to simultaneously use its two limbs or their elements, as well as its tail and claws, and - after having entered them into the container through the different apertures - the animal is able to take out the food through the different apertures. This additionally raises the involvement of the animal's body into the process of getting the food, strengthens the effect of training and expands the range of the animals-users, as well as their abilities when they are using the device according to the invention.

The animal is not always capable to get the food on the first try; even the animals who have been trained for several years have to concentrate their attention and to show dexterity, so that the process of getting the food, so-to-say "hunting for the forage", and the procedure of eating gain a sports-and-gaming character, thus strengthening the function of both the simulator and the feeding troughs in the device according to the invention, as compared to the prototype. Over time, the animal is used to approach the device according to the invention not only under the influence of being hungry; the animal starts to perceive the device not only as the source of food, i.e. as a feeding trough, but also as the means for entertainment, for playing with, as a competitor, and the food which is contained in the device is understood as the object for hunting, a potential prey.

Thus, the total of the essential features of the present invention provides getting the food by the animal with a great convenience to its body and with a higher degree of imitation of the natural getting the food, or hunting, as compared to the known device (prototype). Due to it, more efficient getting the food and a higher effect of training in it are reached, and, compared to the case of the known device, even more effective maintenance of the inborn unconditioned reflexes in the animals that are under supervision of the man is provided as a whole, both in the healthy animals and in the disabled ones. Besides, the device according to the present invention is applicable in the case of training the animals in the course of their feeding as a simulator - feeding trough, which has a wide application range.

Thus, the present invention provides the achievement of the object specified.

It should be noticed that the device and the method according to the invention have a number of additional advantages as compared to the known method and device.

The process of getting food itself becomes interesting for the animal. Besides that, intensified load upon the brain of the animal that has to get food in a more unusual and complicated way, as well as keenness on the process of getting food distracts the animal from overeating. When several various kinds of food are placed into the device simultaneously and there exists the possibility that the animal is able to control the choice of the preferable food visually, it is possible to use one feeding trough by several animals simultaneously.

Moreover, a very important unexpected effect of application of the method and the device according to the invention is the gaining of its stable positive psychological rehabilitation influence on people who observe the animals when they are taking the food. Children, including those subject to autism, elderly persons, disabled persons, persons who are in the state of depression or psycho-physiological decline, as well as persons during post-operative and the post-traumatic periods when observing and supervising over the process of training of the animals using the device according to the invention have possibility to distract from their own problems and to pass from the passive condition of loneliness to the active participation in the training of the pet.

It is preferable that in the method according to the present invention, moving the food is realized with touching a surface with at least one of the limbs, and/or the tail, and/or the food. When moving the food through the container in the direction of the consumption zone, even the short-term touch of the food, as well as of the limbs or the tail, which are clasping the food, to the surface located in the container on the way of moving the food from below upwards helps the animal not to drop the food and to bring it to the consumption zone. On the one hand, carrying over the food with touching a surface increases the efficiency of the training as a whole; on the other hand it raises the success of carrying over the food by stimulating the animal to iteration of the process.

It is preferable that the method according to the present invention also includes the moving of the food in the consumption zone performed with using the finger-wrist-joint unit, and/or claws, and/or cupules of at least one of the limbs and/or the tail of the animal without touching a surface with any of the said parts of the animal and/or with the food. Such a transfer of the food by the animal, directly to its mouth without contact of the limb or of the tail or of the food with any surface, straight in the air, requires very effective controlled adjustment of the position and finely differentiated stabilization of the food transferred with the animal's limb and, hence, strengthening of the work of the brain that promotes the activation of its functioning.

In the device for training animals in the course of their feeding, including the container, which has the bottom and walls, wherein the food is placed on the bottom, and the container has the aperture providing the possibility to access the food with the front limb of the animal and to move the food with the front limb in the direction out of the container,
- according to the present invention, the aperture is located above the bottom level, and the aperture is made providing the possibility to access the food with at least one of the limbs and/or the tail of the animal, but not providing the possibility to access the food with teeth and/or the tongue of the animal.

It is preferable that in the device according to the present invention the container has a top cover, and the aperture is located in the top cover and occupies at least a part of the top cover.

Also it is preferable that in the device according to the present invention, the aperture is located in the wall.

It is more preferable that the device according to the present invention has at least two apertures.

It is also preferable that in the device according to the present invention, the container has at least one surface having the area (part of surface) located at a higher level and the area located at a lower level, providing the possibility of touching the surface with at least one of the limbs and/or with the tail of the animal, and/or with the food, when moving the food in the direction out of the container.

Also preferable that in the device according to the present invention, the area located at a higher level is located at some distance from the edge of the aperture.

It is especially preferable that in the device according to the present invention, the area located at a higher level is located below the edge of the aperture. It complicates the achieving of the food, which is lifted up from the container to the aperture, thus strengthening the efficiency of the training.

Also it is preferable that in the device according to the present invention, the area located at a higher level is located at the level of the edge of the aperture.

Also it is preferable that in the device according to the present invention, the area located at a higher level is located above the edge of the aperture.

Also it is preferable that in the device according to the present invention, the area, located at a higher level, contacts and/or is located in immediate proximity to the edge of the aperture.

It is more preferable that in the device according to the present invention, the container has at least one component, the surface of which is the surface for moving the food.

### Description of Drawings

The subject of the present invention is explained by the description of the concrete examples of realization of the invention, which are given below, and illustrated by the drawings supplemented.
Figure 1 shows schematically the first version of the device for training animals in the course of their feeding according to the present invention, front view, vertical section.
Figure 2 shows schematically the device according to the present invention presented in Fig. 1, top view.
Figure 3 shows schematically the second version of the device according to the present invention, front view, a vertical section.
Figure 4 shows schematically the device according to the present invention presented in Fig. 3, top view.
Figure 5 shows schematically the third version of the device according to the present invention, front view, a vertical section.
Figure 6 shows schematically the device according to the present invention presented in Fig. 5, top view.
Figure 7 shows schematically the fourth version of the device according to the present invention, front view, a vertical section.
Figure 8 shows schematically the device according to the present invention presented on Fig. 7, top view.

### Examples of Realization of the Invention

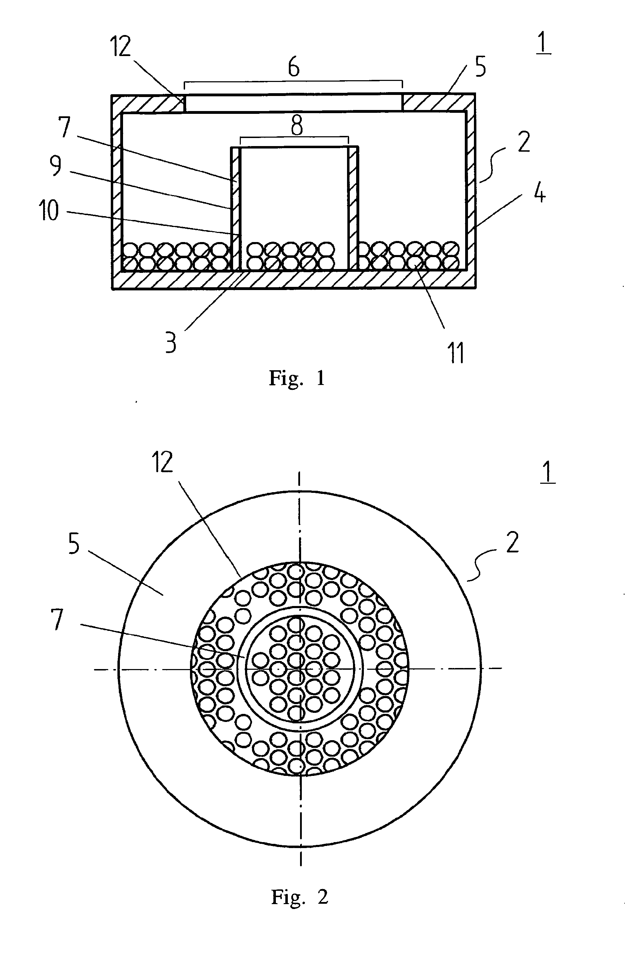

One of the examples of realization of the device according to the present invention has the following design (Fig. 1 - Fig. 2). The device 1 for training animals in the course of their feeding (further also the device) has the container 2, which is round in plan, formed with the bottom 3, the wall 4 and the flat top cover 5; in the central part of the cover the round top aperture 6 of the container is located. The bottom is the surface for food placing. The hollow vertical cylindrical element 7, which is connected to the bottom and has the aperture 8 of the cylinder on its top, is located under the aperture 6. The element 7 is visible through the top aperture 6 of the container and doesn't reach the aperture level. The external surface 9 and internal surface 10 of the wall of the hollow cylindrical element can be vertical or inclined, plane or curvilinear. The food 11, in particular granulated dry food or slices of crude meat, fish, fruit, nuts, dried insects, crackers or food mixes, etc., are placed on the bottom of the container. In particular, the device can be used for representatives of cat family.

In the course of food consumption the animal, for example a cat, is sitting next to the device 1. The dimensions of the aperture 8 of the cylinder and the distance between the top of the element 7 and the edge 12 of the top aperture 6 of the container allow the cat to push its limb into the element 7 and into the space between this element and the wall of the container and to reach the food, which is placed there. Depending on the constitution and the sizes of the animal's muzzle, as well as on the dimensions and the configuration of the aperture, the cat sometimes manages to push the front part of its muzzle into the apertures container, but the distance between the apertures 6 and 8 and the food is so greater as compared to the length of the cat's teeth or put-out tongue that it doesn't allow achieving the food with the cat's tongue or teeth, and the cat has to get the food out of the container with its limb.

The food can be placed on the different parts of the bottom that are accessible with the limb of the animal in different ways. Having reached with the limb the most accessible part of the food, which in this case is placed in the cylindrical element 7, the cat is performing the taking of the food via complex movements of the finger-wrist-joint unit of its limb and/or claws and/or cupules and is pulling the food upwards. To keep the food with the limb when moving the food upwards in the vertical direction or slantwise, the cat has to show dexterity and sharpness and to make effective efforts to controllably adjust the position of the food transferred making for this purpose various complex movements with the elements of its finger-wrist-joint unit, the claws and the cupules. The moving of the food from the bottom upwards can occur under the contact between the limb of the animal and the internal surface of the container 2, with the external surface 9 or the internal surface 10 of the cylindrical element 7 or in the absence of such contact. It depends on the diameter of the apertures 6 and 8, the height of the wall of the cylindrical element 7 and the angle of the slope of the surfaces 9 and 10, on the constitutional peculiarities of the animal's limb, on the training level of the animal and on many other circumstances. Such a touching the surface helps the animal to retain the food while moving it and not to drop the food to the bottom of the container.

Having lifted the food to the top of the element 7, the animal tries to seize the food with its teeth, lips or to lick it off with its tongue. Herein the animal has to adjust the position of the food with respect to its limb, to fix the food and to give to the limb a certain position so that not to allow the food to roll down back to the bottom. Without having managed to seize the food lifted to the top of the element 7 with the mouth, the animal tries to move the food outside the container directly to the mouth, with fast and sharp gesture of the limb. At this moment, the cat is unable to touch any surface and transfers the food without any support. Also, even before achieving the top of the cylindrical element, the animal can throw the taken food up towards its mouth with a sharp throwing movement.

All the movements of the animal's limb carried out in the course of taking food from the device according to the invention, namely when taking the food from the bottom of the cylindrical element 7, lifting-up the food out of the element 7, then lifting-up the food to the aperture 8 of the container, attempting to reach the food near the aperture with the tongue or teeth and further carrying the food outside the container's borders to the animal's mouth providing the fixation of the food with the limb, are connected with the functioning of finely differentiated parts of the brain and thus produce an activating effect on the function of the animal's brain.

Having eaten all the food, which was inside the cylindrical element 7, but having not been satiated, the animal starts to get the food, which is screened with the top cover, by extracting the food out of the space between the element 7 and the container wall, either contacting or not contacting with the external surface 9 of the wall of the cylindrical element or with the internal surface of the container. This demands special dexterity and persistence and exerts a very strong impact on the straining of the hunting reflexes.

The process of getting food out of the device according to the invention demands from the animal the concentration of attention, the equilibrium sense and the dexterity and generally speaking acts for the animal as the part of training on the physical level as well as on the psychological and intellectual levels.

The device according to the present invention can have various construction and various design depending on the species of the animal, its age, character features, etc. The device can have the container that is round in plan or the container in the form of a rectangular parallelepiped. The container can have vertical and/or sloped, plane and/or curvilinear walls, the top cover, and the apertures of various forms and arrangement, which can be located in the top cover as well as in the walls; also the container can be completely opened from above, i.e. it can be made without the top cover. There can be a various number of the elements of various forms inside the container, which are partitioning off the internal space of the container transforming it into a labyrinth, inside the container. These elements can have any configuration in plan: they can be straight-lined, rounded, a part of a circumference or a combination of curves and straight and/or broken lines, have the form of squares and triangles, etc. The surface of the partitions can be either vertical or sloped, either plain or curvilinear. The surfaces of the device oriented upwards can serve to the animal as the surface for moving the food from the bottom to the aperture - in the direction of the consumption zone.

Also, the aperture can be located in the wall of the container. In this case, the dimensions and the form of the aperture, and the distance between the aperture and the bottom should also allow the animal to reach the food with one of the elements of the limb, at least with the claws or suckers, or with the tail, but not with the teeth or tongue.

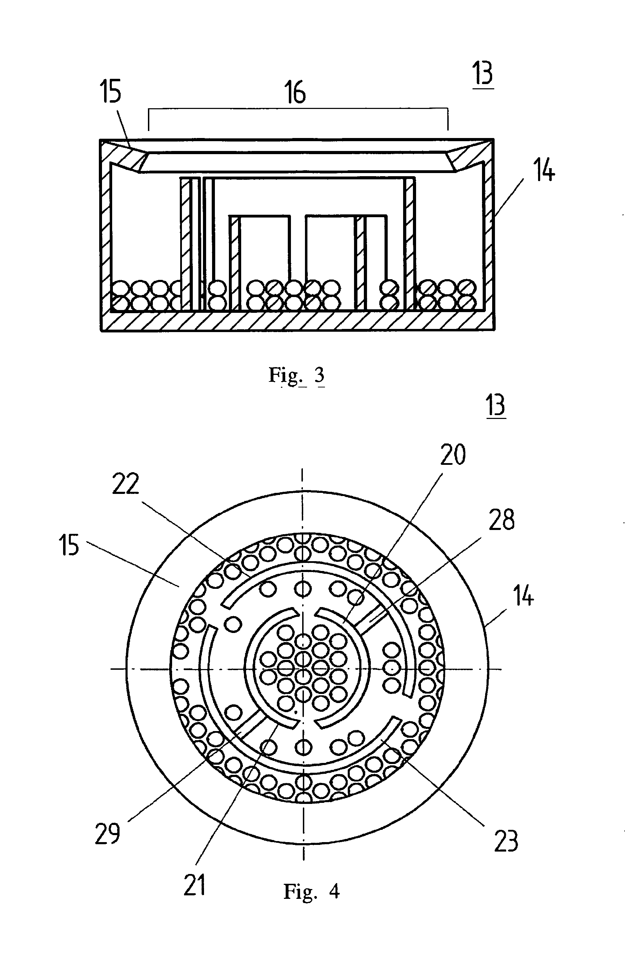

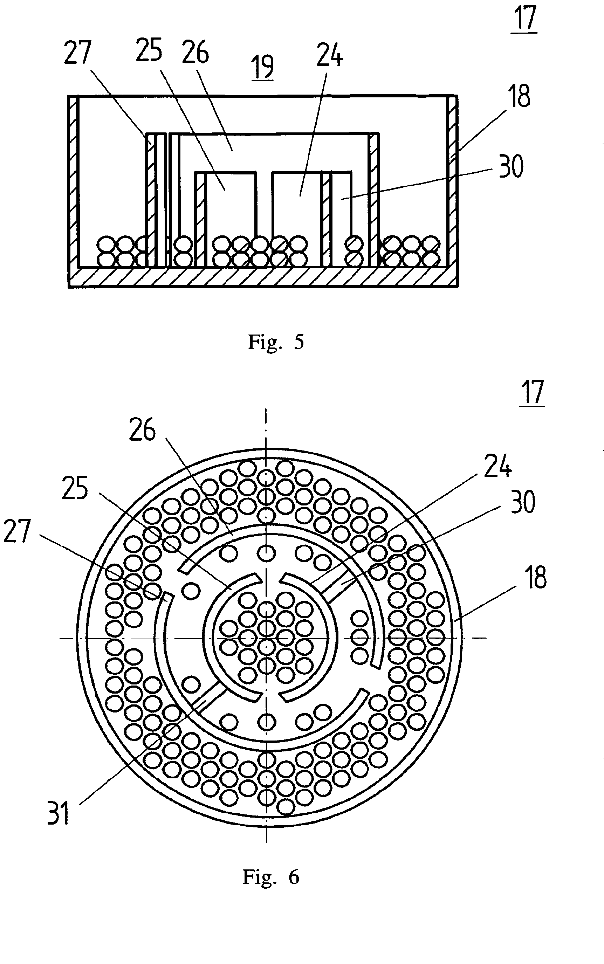

Another example of the realization of the invention can be represented by the devices for training animals in the course of their feeding that are round in plan and have a labyrinth system of partitions inside the container. These are the device 13 (Fig. 3 - Fig. 4), in which the container has the wall 14, the top cover 15 sloped to the center and the top aperture 16, and the device 17 (Fig. 5 - Fig. 6), in which the container has the wall 18 and the top aperture 19 completely opening the container from above, i.e. the container is perfomed without the top cover. In such devices there can be several partitions presenting parts of the wall of a hollow cylinder, for example, the partitions 20 - 23 in the device 13 (Fig. 3 - Fig. 4) and the partitions 24 - 27 in the device 17 (Fig. 5 - Fig. 6). The partitions are located concentrically and can be interconnected by the bridges 28 and 29 (Fig. 3 - Fig. 4) and the bridges 30 and 31 (Fig. 5 - Fig. 6) forming a labyrinth inside the container. In such a device-labyrinth, the animal can move the food upwards or shift it along the bottom to the area that is more convenient for lifting food out of the container. It diversifies the process of extracting the food out of the device according to the invention due giving it the game character and strengthening the effect of training. There can be different systems of partitions, bridges and elements of various form forming labyrinths of a different configuration in such a device.

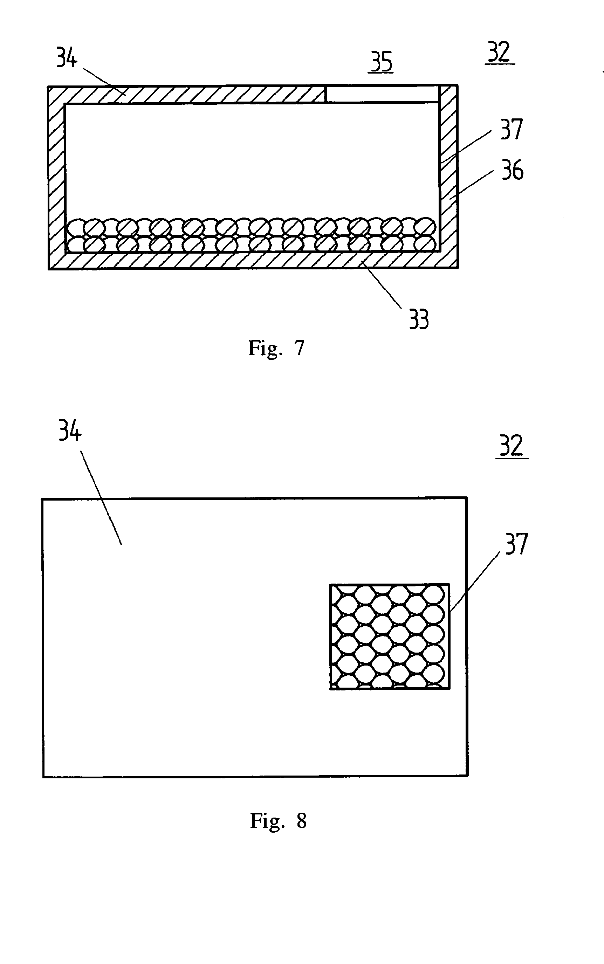

The device 32 for training animals in the course of their feeding (Fig. 7 - Fig. 8) has the container in the form of a rectangular parallelepiped with the bottom 33 and the flat top cover 34, where the rectangular aperture 35 is located directly next to the wall 36 of the container. The aperture form is different: it can be a circle, a rectangle, etc. In this device, the internal surface 37 of the container walls can play a role of the surface for moving the food, over which the animal can lift the food out of the container. The aperture can also be located at a certain distance from the wall.

The device for training animals in the course of their feeding according to the present invention is intended for various animals with prehensile instinct of hunting for prey: representatives of cat family, squirrel family, marten family, bear family and primacies. Macaques, lemurs, tarsiers and other caudiferous monkeys can get the food out of the device according to the invention with both front and hind limbs, as well as with the tail. Lemurs and tarsiers can also get the food using the cupules of the pads of their paws additionally. The size of the device, its dimensions and arrangement of its separate parts vary for various species of animals and for the animals of different age: cubs, adults, old, weakened and sick animals. For example, in the round device for large house cats (Fig. 3 - Fig. 4), the external diameter of the bottom of the container 13 makes about 250 mm, the diameter of the circle, which includes the partitions 20 and 21 as its components, makes from 18 mm through 80 mm depending on the size of the cat. The horizontal distance between the adjacent partitions 20 and 22 and partitions 21 and 23, which are concentrically located, as well as the width of the gap between the edge of top aperture 16 of the container and the nearest concentric partition 22 or partition 23 makes about 24 mm, the height of the container is about 85 mm, the height of the partitions 20 and 21 and partitions 22 and 23 is about 40 mm and about 55 mm, respectively. The distance between the aperture and the food placed on the bottom of the container should exceed the greater of the two sizes: the length of the pulled out tongue and the length of the claw of the animal.

### Industrial Applicability

The invention concerns the methods of training animals in the course of their feeding and is intended for the animals that are under the supervision of the man. The method and the device according to the invention are compatible with any kind of food, preferably with the granulated food or some other types of dry food. The method according to the present invention is applicable to the animals with the prehensile instinct of hunting for prey. The invention can be applied to the animals that are kept in various conditions of the closed housing: both for pets and for the animals that are kept at fur-breeding farms and reserved-hunting enterprises, at ranches, zoos and nurseries. In particular, at the nurseries, the invention is applicable for training the young animals for its resettlement into the conditions of wild nature, for developing in the animals, which have grown in the conditions of closed housing, the hunting instinct that is necessary for the animals to survive in the natural environment. To the animals, in which one of the front limbs is not able to function during the post-operative period or because the limb is damaged, the device according to the invention can serve not only as a feeding trough, but also as the means of the physical therapy treatment that helps restore the lost functions of the sore limb. To the disabled animals with only one front limb able to function, the device according to the invention provides not only the possibility of adequate feeding, but also the increase of the animals' vitality.

The simulator-feeding trough according to the invention can be made using the known materials and with application of the known equipment and technologies.

The variants of realization of the method and the device according to the present invention are not limited by the examples given in the present description of the invention. Other variants of embodiment of the invention are also possible within the scope of the Claims.

## Claims

1. Method for training animals in the course of their feeding, which method includes the consecutive stages:
- placing the food on the surface for placing food providing access to the food with one of the front limbs of the animal,
- reaching the food with one of the front limbs of the animal,
- taking the food with one of the front limbs of the animal, and
- moving the food with one of the front limbs of the animal in the direction of the consumption zone,
**characterised in that**
- placing the food is carried out providing access to the food with at least one of the limbs and/or with the tail of the animal, without access to the food with teeth and/or the tongue, and providing possibility to reach the food in the direction of higher level to lower level; and
- reaching the food is carried out with at least one of the limbs and/or with the tail being in a position different from horizontal, and
- taking the food is carried out with at least one of the limbs and/or with the tail being in a position different from horizontal, and
- moving the food is carried out during the whole process of moving food with at least one of the limbs and/or with the tail in the direction of lower level to higher level, providing control and adjustment of the food position relative to at least one of the limbs and/or to the tail moving the food, and preventing contact between the food and the surface for placing food.

2. The method according to claim 1, **characterised in that** moving the food is realized providing the touching of a surface with at least one of the limbs, and/or the tail, and/or the food.

3. The method according to claim 1 or 2, **characterised in that** it also includes the moving of the food in the consumption zone performed with the finger-wrist-joint unit, and/or with claws, and/or with cupules of at least one of the limbs, and/or with the tail, without touching the surface with any of the said parts of the animal and/or with the food.

4. The device (1, 13, 17, 32) for training animals in the course of their feeding, including a container (2), which has a bottom (3, 33) and walls (4, 14, 18, 36), where the food (11) is placed on the bottom, and the container has the aperture to access the food with the front limb of the animal and to move the food with the front limb in the direction out of the container, **characterised in that** the aperture (6, 16, 19, 35) is located above the bottom level, and the aperture is made providing the possibility to access the food with at least one of the limbs and/or the tail, but not providing the possibility to access the food with teeth and/or the tongue of the animal.

5. The device according to claim 4, **characterised in that** the container has the top cover (5, 15, 34), and the aperture (6, 16, 19, 35) is located in the top cover and takes up at least a part of the top cover.

6. The device according to claim 4, **characterised in that** the aperture is located in the wall.

7. The device according to any of claims 4 - 6, **characterised in that** the device has at least two apertures.

8. The device according to any of claims 4 - 7, **characterised in that** the container has at least one surface (9, 10, 37) having the area located at a lower level and the area located at a higher level providing the possibility of touching the surface with at least one of the limbs and/or with the tail of the animal, and/or with the food when moving the food in the direction out of the container.

9. The device according to claim 8, **characterised in that** the area of the surface (9, 10) located at a higher level is located at a distance from the edge of the aperture (6).

10. The device according to claim 8 or 9, **characterised in that** the area of the surface (9, 10) located at a higher level is located below the edge of the aperture (6).

11. The device according to claim 8 or 9, **characterised in that** the area of the surface located at a higher level is located at the same level as the edge of the aperture.

12. The device according to claim 8 or 9, **characterised in that** the area of the surface located at a higher level is located above the edge of the aperture.

13. The device according to claim 8, **characterised in that** the area of the surface (37) located at a higher level adjoins and/or is in immediate proximity to the edge of the aperture (35).

14. The device according to any of claims 4 - 13, **characterised in that** the container has at least one element (7, 36, 20 - 23, 24 - 27, 28 - 31), which has a surface (9, 10, 37), which is the surface for moving the food.
